# EUROPÄISCHE PATENTSCHRIFT

(11) **EP 4 411 194 B1**
(45) Veröffentlichungstag und Bekanntmachung des Hinweises auf die Patenterteilung: **01.04.2026**
(21) Anmeldenummer: 24150523.9
(22) Anmeldetag: 05.01.2024
(51) Int. Cl.: F16L 41/08, F16L 41/12

(54) **ANSCHLUSSSYSTEM**
CONNECTION SYSTEM
SYSTÈME DE RACCORDEMENT

(30) Priorität: 03.02.2023 DE 202023100528 U
(43) Veröffentlichungstag der Anmeldung: 07.08.2024
(73) Patentinhaber: REHAU Industries SE & Co. KG, 95111 Rehau (DE)
(72) Erfinder: Sieber, Jürgen, 91074 Herzogenaurach (DE); Lipphardt, Tobias, 91085 Weisendorf (DE); Bloße, Robert, 15517 Fürstenwalde (DE)

(56) Entgegenhaltungen:
- EP-A1- 3 985 296
- DE-U1- 202017 107 706
- KR-A- 20060 013 314
- US-A- 3 953 555

## Beschreibung

Die Erfindung betrifft ein Anschlusssystem zum Anschließen eines Rohres an ein Hauptrohr. Weiterhin betrifft die Erfindung ein Rohrsystem, das mit einem derartigen Anschlusssystem ausgestattet ist gemäß dem Oberbegriff des Anspruches 1.

Der Anschluss eines Rohres an ein Hauptrohr ist ein häufig anzutreffender Fall, wenn beispielsweise Wohngebiete erschlossen werden und Abwasserrohre aus den einzelnen Häusern oder Wohnblocks an ein Hauptrohr anzubinden sind. Hierzu sind Anschlusssysteme notwendig, die einfach zu installieren sind, die die für diesen Zweck notwendige hohe Zuverlässigkeit hinsichtlich der Dichtheit aufweisen und kostengünstig sind. Insbesondere ist eine solche nachträgliche Installation an einem Hauptrohr eine Arbeit, die unter Kostengesichtspunkten so einfach wie möglich bewerkstelligt werden soll, um den Aushub für die Baugrube zu minimieren, dennoch aber einen praktikablen - vor allem aber dauerhaften und zuverlässig dichten - Anschluss herzustellen.

So ist beispielsweise aus der DE 10 2008 021 470 A1 bekannt, ein Rohr mithilfe eines Anschlusssystems an ein Hauptrohr anzuschließen. Die Dichtheit wird hierbei durch einen Elastomereinsatz erreicht, der in der Queröffnung des Hauptrohres positioniert ist.

Die KR 2006/0013314 A offenbart eine Abzweigverbindungsvorrichtung zum Verbinden eines Abzweigs mit einem Hauptkörper; mit einer Abzweigvorrichtung aus Gummi mit einer am oberen Außenumfang ausgebildeten Verriegelung, einem ringförmigen oberen Flügel mit der gleichen Krümmung wie der Außenumfang des Hauptrohrs, der unterhalb der Verriegelung ausgebildet ist, einem ringförmigen unteren Flügel mit der gleichen Krümmung wie der Innenumfang des Hauptrohrs, der unterhalb des oberen Flügels ausgebildet ist, einem Innendurchmesser, der sich von oben nach unten allmählich verengt, und einem sägezahnförmigen wasserdichten Vorsprung, der zum Hauptrohr hin geneigt ist und am Innenumfang ausgebildet ist; eine Muffe mit einem Schaftabschnitt, der in die Innenfläche der obigen Gummiabzweigvorrichtung passt, und einem Erweiterungsabschnitt, in den ein Abzweigrohr eingepasst wird; eine erste Schelle, die den Umfang zwischen der Klinke und dem oberen Flügel der obigen Gummiabzweigvorrichtung drückt und auf beiden Seiten Befestigungsrippen aufweist; und einer Abzweigrohr-Verbindungsvorrichtung, wobei eine zweite Schelle, die mit der Befestigungsrippe der ersten Schelle verbunden ist, während sie sich um den Außenumfang des Hauptrohrs wickelt. Die Abzweigrohrverbindungsvorrichtung ist weiter so ausgebildet, dass in jeder der oben erwähnten Befestigungsrippen ein diagonales Schraubenloch ausgebildet ist, ein mit jedem Ende der zweiten Schelle kombinierter Bolzen an dem diagonalen Schraubenloch befestigt ist und eine Mutter am oberen Teil des Bolzens fertig befestigt ist.

Die DE 202017107706 U1 offenbart ein Dichtungselement zur Herstellung einer fluiddichten Verbindung eines Hauptrohres, eines Schachtes oder dergleichen, mit einem Rohr oder einem Rohrformteil, wobei das Dichtungselement einen Durchgang mit einer Achse A aufweist, der von einer Wandung des Dichtungselements begrenzt ist, mit einer an der Wandung ausgebildeten Innenoberfläche und einer Außenoberfläche, und wobei der Durchgang derart bemessen ist, dass er zum fluiddichten Einstecken des Rohres oder Rohrformteils geeignet ist, und wobei an der Außenoberfläche der Wandung des Dichtungselements eine Mehrzahl von sich nach außen erhebende Stege ausgebildet sind, die eine Mehrzahl von Kompartimenten umschließen, wobei die Kompartimente eine nur nach außen offene Seite aufweisen, und wobei zwei benachbarte Kompartimente wenigstens einen gemeinsamen sie zumindest teilweise begrenzenden Steg aufweisen und an wenigstens einer Stelle der Außenoberfläche in einer dieser Stelle zugeordneten Ebene E senkrecht zur Achse A des Durchgangs des Dichtungselements zwei Kompartimente benachbart in oder etwa in Umfangsrichtung aneinander angrenzen. Dabei weist die gesamte Außenoberfläche oder annähernd die gesamte Außenoberfläche Kompartimente auf. Die Kompartimente sind an ihrer nach außen offenen Seite regelmäßig geformt.

Allgemein besteht ein großes Interesse, einfachere Anschlusssysteme mit einem hohen Grad an Dichtheit zur Verfügung gestellt zu bekommen, die des Weiteren in schneller und sicherer Weise installierbar sind.

Die vorgenannte bewährte Technik stößt an ihre Grenzen, wenn ein inlinersaniertes Hauptrohr vorliegt. Bei einem inlinersanierten Hauptrohr ist ein sog. Inliner - eine kunststoffbasierte Auskleidung mit einer dünnen Wandstärke - im Inneren des Hauptrohres positioniert, weil dieses vorher beispielsweise durch Beschädigungen, Wurzeleinwuchs und anderes mehr undicht geworden ist. Insbesondere Rohre aus Beton oder Steinzeug oder Stahlbeton sind häufig auf Grund des Rohrmaterials von solchen Schäden betroffen. Durch die Sanierung mit einem Inliner - mit einem kunststoffbasierten Auskleidung im Inneren eines beschädigten Rohres - kann dieses wieder nahezu uneingeschränkt genutzt werden.

Ein Anschlusssystem zum Anschließen eines Rohres an ein solches Hauptrohr, insbesondere an ein durch einen Inliner saniertes Hauptrohr, muss daher nicht nur die Dichtheit an der Queröffnung sicherstellen, sondern auch verhindern, dass in den Spalt zwischen der Innenoberfläche des Hauptrohres und dem Inliner Flüssigkeit eindringt.

Gleiches gilt auch für Schächte, auch an diesen sind Anschlüsse nachträglich herzustellen, auch diese sind häufig mit Hilfe einer Auskleidung saniert.

Da eine Vielzahl von unterschiedlichen Hauptrohren - insbesondere solchen mit einer unterschiedlichen Dicke der Rohrwandung - verlegt sind, besteht der Bedarf darin, dass eine möglichst universelle, das heißt einen großen Rohrwanddickenbereich abdeckende Lösung in Form eines Anschlusssystems am Markt verfügbar ist.

Hier setzt die Erfindung ein, die es sich zur Aufgabe gestellt hat, ein Anschlusssystem bereitzustellen, das die Probleme des Standes der Technik überwindet, das wirtschaftlich und kostengünstig herstellbar ist, welches einfach, schnell und nahezu werkzeuglos montierbar ist und welches für viele Wanddicken sowie Durchmesser von Rohren und dergleichen einsetzbar ist.

Die Lösung dieser Aufgabe erfolgt mit den Merkmalen gemäß Anspruch 1. Weitere vorteilhafte Ausführungen sind in den Unteransprüchen beschrieben.

Es wurde im Rahmen der vorliegenden Erfindung erkannt, dass ein Anschlusssystem zum Anschließen eines Rohres an ein Hauptrohr, einen Schacht, oder dergleichen, an einer Queröffnung, wobei das Anschlusssystem zu diesem Zweck mit dem Hauptrohr oder dem Schacht verbindbar ist, mit einem hohlstopfenförmigen, zumindest teilweise weichen Installationseinsatz, dessen Außenseite an die Queröffnung angepasst ist, wobei der Installationseinsatz einen aufgeweiteten Endabschnitt mit wenigstens einer Krempe aufweist, der durch Zusammendrücken mit der Krempe voran durch die Queröffnung des Hauptrohres oder Schachts in dieses / diesen teilweise einschiebbar ist, und wobei eine äußere Anlagefläche des Installationseinsatzes in einem Verbindungszustand, in dem das Anschlusssystem mit dem Hauptrohr oder Schacht verbunden ist, wenigstens teilweise eine Bohrlochoberfläche, die an die Queröffnung angrenzt und diese umgibt, kontaktiert, wobei an dem dem aufgeweiteten Endabschnitt gegenüberliegenden Endabschnitt des Installationseinsatzes wenigstens ein Anlageelement und dem dem aufgeweiteten Endabschnitt gegenüberliegenden Ende der Anlagefläche des Installationseinsatzes wenigstens ein Fixierelement angeordnet ist, und einem relativ härteren Anschlussstutzen, der ein Eingriffsende, einen zylinderförmigen Mittelteil und ein Verbindungsende aufweist, wobei der Anschlussstutzen an seinem zylinderförmigen Mittelteil und/oder seinem Verbindungsende wenigstens einen Steg aufweist, wobei der Installationseinsatz wenigstens zwei, von seiner Innenseite wegragende, etwa bogenförmig verlaufende, Dichtungsvorrichtungen aufweist, wobei die Dichtungsvorrichtungen sich an der Innenseite des Installationseinsatzes an wenigstens zwei Positionen kreuzen, sich dadurch auszeichnet, dass der Installationseinsatz an seinem freien, oberen Ende wenigstens zwei, zum Innenraum ragende, Haltevorrichtungen aufweist. Als Krempe soll hier ein Übergangsteil zwischen einem Rohr und seinem Abschluss verstanden werden. Mithilfe dieses Anschlusssystems ist es realisierbar, eine hohe Zuverlässigkeit hinsichtlich der Dichtheit zwischen dem angeschlossenen Rohr und dem Hauptrohr, und insbesondere einem Hauptrohr, das optional inlinersaniert ist, herzustellen. Weiterhin ist es mit diesem Anschlusssystem gemäß der vorliegenden Erfindung möglich, eine möglichst universelle, das heißt einen großen Rohrwanddickenbereich abdeckende Lösung für den Anschluss eines Rohres an ein Hauptrohr oder einen Schacht oder dergleichen zur Verfügung zu stellen. Ein derartiges Anschlusssystem ist gegenüber dem Stand der Technik wesentlich verbessert, was die Zuverlässigkeit insbesondere der Dichtheit angeht, es ist einfach herzustellen, kostengünstig bereitzustellen und ohne besonderen Aufwand zu installieren.

Ein weiterer Vorteil des Anschlusssystems ist, dass die sich kreuzenden Dichtungsvorrichtungen wenigstens eine Dichtfläche begrenzen und/oder umschließen. Hierdurch ist das Anschlusssystem kostengünstig und wirtschaftlich herstellbar, die Dichtheit ist dadurch zuverlässig gewährleistet.

Weiterhin vorteilhaft bei dem Anschlusssystem ist, dass die Dichtfläche etwa wabenförmig rautenförmig, labyrinthförmig, mäanderförmig, prismatisch, oval, rund und dergleichen ausgebildet ist. Das Anschlusssystem ist somit vorteilhafter Weise abdichtend und an alle Rohre, Schächte und dergleichen montierbar.

Ebenfalls vorteilhaft bei dem Anschlusssystem ist, dass die sich kreuzenden Dichtungsvorrichtungen im Querschnitt etwa rund, oval, prismatisch, insbesondere dreieckförmig ausgebildet sind.

Das Anschlusssystem ist vorteilhafter Weise weiterhin so ausgebildet, dass die Dichtungsvorrichtungen etwa 0,5 bis 10 mm, bevorzugt 1 bis 7 mm, besonders bevorzugt 1 bis 5 mm von der Innenseite des Installationseinsatzes wegragen. Hierdurch lässt sich das Anschlusssystem mit zahlreichen Rohrdurchmessern bzw. Wanddicken schnell, einfach sowie werkzeuglos montieren und gewährleistet immer die geforderte Dichtheit.

Es hat sich weiter vorteilhaft bei dem Anschlusssystem gezeigt, dass die zwei sich kreuzenden Dichtungsvorrichtungen des Installationseinsatzes mit wenigstens einem zylinderförmigen Mittelteil des Anschlussstutzens abdichtend in Wirkverbindung stehen. Hierdurch ist neben einer werkzeuglosen Montage des Anschlusssystems auch jederzeit dessen Dichtheit gesichert.

In einer weiteren vorteilhaften Variante ist das Anschlusssystem so ausgebildet, dass das obere freie Ende des Installationseinsatzes mit dem wenigstens einen Steg des Anschlussstutzens abdichtend in Wirkverbindung steht. Hierdurch wird die erforderliche Dichtheit des Anschlusssystems nochmals abgesichert.

Ein weiterer Vorteil des Anschlusssystems ist, dass zwischen der Krempe und dem wenigstens einem Dichtelement wenigstens eine Quelldichtung angeordnet ist. Diese Maßnahme führt zu einer noch besseren Abdichtung des Anschlusssystems, da die Quelldichtung eine zusätzliche, ergänzende Abdichtung gegen ev. Unebenheiten an den Schnittkanten des Inliners ist.

Das Anschlusssystem ist in erfinderischer Weise so ausgebildet, dass der Installationseinsatz an seinem freien, oberen Ende wenigstens zwei, zum Innenraum ragende, Haltevorrichtungen aufweist. Somit lässt sich der Anschlussstutzen, welcher wirtschaftlich sowie kostengünstig herstellbar ist, auch werkzeuglos im Installationseinsatz einbringen, abdichten und anordnen.

Bekannterweise ist das Anschlusssystem so ausgebildet, dass die wenigstens zwei Haltevorrichtungen des Installationseinsatzes mit wenigstens einem Steg des Anschlussstutzens in Wirkverbindung stehen. Hierdurch ist es möglich, die Bestandteile des Anschlusssystems werkzeuglos, schnell und montagefreundlich miteinander zu verbinden und den Anschlussstutzen kraftschlüssig mit dem Installationseinsatz zu verbinden.

Es ist auch vorteilhaft, wenn das Anschlusssystem derartig ausgebildet ist, dass am Endabschnitt des Installationseinsatzes eine Mehrzahl von Fixierelementen und eine Mehrzahl von Anlageelementen angeordnet ist. Durch die Anordnung einer Mehrzahl von Fixierelementen und einer Mehrzahl von Anlageelementen gelingt es in einfacher Weise, eine ganz besonders hohe Dichtheit des Anschlusssystems der vorliegenden Erfindung zu gewährleisten.

In einer vorteilhaften Fortbildung der vorliegenden Erfindung ist erkannt worden, dass das Anschlusssystem derart ausbildbar ist, dass der Installationseinsatz zumindest teilweise hart und zumindest teilweise weich ausgebildet ist.

Es hat sich bei der vorliegenden Erfindung als sehr praktikabel erwiesen, wenn ein Festlegemittel vorgesehen ist, mit dem das Fixierelement in einem fixierten Zustand festlegbar ist. Unter "Fixieren" oder "fixierter Zustand" ist im Rahmen dieser Erfindung zu verstehen, dass der Installationseinsatz, an dem wenigstens ein Fixierelement angeordnet ist, in der Queröffnung des Hauptrohres in einer definierten Anordnung positioniert ist, wobei die Krempe des Installationseinsatzes an der Innenoberfläche des Hauptrohres oder des Inliners anliegt. Das Festlegemittel, beispielsweise in Form eines Ringes oder Kreisringes ausgebildet, kann auf die Außenoberfläche des Hauptrohres aufgelegt oder an der Hauptrohr- Außenoberfläche befestigt werden. In einer sehr günstigen Ausführungsform kann das Festlegemittel eine solche Biegbarkeit aufweisen, dass es an die Außenoberfläche von Hauptrohren verschiedenen Durchmessers anlegbar oder zumindest abschnittsweise anlegbar ist.

Ein solches Festlegemittel, das beispielsweise in Form eines Ringes bzw. Kreisringes ausgebildet sein kann, ist sehr vorteilhaft dazu einzusetzen, mit dem Fixierelement zusammenzuwirken und dieses in einem fixierten Zustand festzulegen.

Bei entsprechender Auslegung des Festlegemittels in Form eines Ringes oder Kreisringes, der auf die Außenoberfläche des Hauptrohres aufgelegt wird und bei entsprechender Gestaltung der Fixierelemente, die daran zur Herstellung des fixierten Zustandes festgelegt werden, kann sich der Ring oder Kreisring um die Queröffnung im Hauptrohr zentrieren. Dies ist vorteilhaft nutzbar für eine einfache Installation des Anschlusssystems am Hauptrohr.

Durch die teilweise weiche Ausbildung des Installationseinsatzes ist dieser genau nach den herrschenden technischen Abhängigkeiten und Notwendigkeiten hinsichtlich einer einfachen Installation sowie einer guten und dauerhaften Gebrauchsfähigkeit konstruiert und gefertigt.

Das Anschlusssystem ist weiter derart ausgebildet, dass der Anschlussstutzen und / oder der Installationseinsatz und / oder das Fixierelement und / oder das Festlegemittel ein Polymermaterial enthält oder aus einem Polymermaterial besteht, wobei das Polymermaterial bevorzugt ein Thermoplast, und besonders bevorzugt ein Polyolefin, wie beispielsweise ein Polypropylen oder ein Polyethylen oder ein Polybutylen oder ein Polyamid oder ein Copolymeres der Vorgenannten, oder ein Polyvinylchlorid ist und / oder der Installationseinsatzes ein elastomeres Polymermaterial enthält oder aus einem solchen besteht. Anschlussstutzen, Installationseinsatz, Fixierelement und Festlegemittel aus Polymermaterial bzw. solche, die ein Polymermaterial enthalten, sind langlebig, inert, stabil, weisen ein geringes Gewicht auf, sind einfach handhabbar, leicht installierbar und können kostengünstig bereitgestellt werden.

Gleiches gilt für den Installationseinsatz, der aus einem elastomeren Polymermaterial besteht oder ein solches enthält. Hierzu kann eine Auswahl aus Gummi, Styrol-Butadien-Kautschuk (SBR), Ethylen-Propylen-Dien-Kautschuk (EPDM), Nitril-Butadien-Kautschuk (NBR), Thermoplastisches Elastomer (TPE) ergänzen oder anderen für die Herstellung des Installationseinsatzes erfolgen.

Die Aufgabe der vorliegenden Erfindung, ein Rohrsystem anzugeben, wird durch die Merkmale des Anspruches 11 in Rückbezug auf die Ansprüche 1 bis 10 gelöst.

Im Rahmen der vorliegenden Erfindung wurde erkannt, dass ein Rohrsystem dann besonders optimal ausgebildet ist, wenn es wenigstens ein Anschlusssystem, wie vorstehend beschrieben, aufweist. Ein solches Rohrsystem ist gegenüber dem Stand der Technik gerade im Hinblick auf die Dichtigkeit aber auch durch die schnelle, einfache und werkzeuglose Montage wesentlich verbessert. Durch ein solches erfindungsgemäßes Anschlusssystem wird ein Rohrsystem in ganz besonderer Weise technisch aufgewertet. Daraus resultieren dann die vorstehend beschriebenen Vorteile.

Das erfindungsgemäße Anschlusssystem wird wie folgt montiert:
Zunächst ist im Hauptrohr nach bekanntem Verfahren eine Queröffnung herzustellen, das kann beispielsweise durch einen Bohrvorgang oder einen Fräsvorgang geschehen. Wenn die Queröffnung im Hauptrohr hergestellt ist und wenn der Rand der Queröffnung und die Bohrlochoberfläche, die durch den Bohr- oder Fräsprozess erzeugt wurde und die Queröffnung begrenzt, entsprechend geglättet ist, ist der Installationseinsatz in einem deformierten Zustand mit der Krempe voraus in die Queröffnung des Hauptrohres teilweise einzuführen, wobei nach dem Einführen dann die Deformation rückgängig zu machen ist. In diesem Zustand stehen die Fixierelemente nach außen.

Das Anlageelement liegt bei der Installation an einem Hauptrohr, einem Schacht oder dergleichen mit einer großen Wanddicke, beispielsweise mit einer Wanddicke von ca. 60 mm, wie man es bei Beton- oder Stahlbetonrohren antrifft, an dessen Außenoberfläche an und übt dort eine Haltefunktion aus, indem der Installationseinsatz dann im Inneren des Rohres durch die Krempe und außen am Rohr durch das Anlageelement sicher im Durchbruch gehalten ist.

In diesem Fall, also bei Hauptrohren, Schächten oder dergleichen mit einer großen Wanddicke, beispielsweise mit einer Wanddicke von ca. 60 mm, wie man es beispielsweise bei Beton- oder Stahlbetonrohren antrifft, ist dann für gewöhnlich keine Fixierung des Installationseinsatzes mit den Fixierelementen gemäß vorstehender Beschreibung erforderlich.

Bei der Installation an einem Hauptrohr, einem Schacht oder dergleichen mit einer kleinen Wanddicke, beispielsweise mit einer Wanddicke von ca. 30 mm, wie man es z.B. bei Steinzeugrohren antrifft, ist das Fixierelement im Zusammenwirken mit dem Festlegemittel für eine sichere Positionierung des Installationseinsatzes im Durchbruch notwendig. In diesem Fall, also bei Hauptrohren, Schächten oder dergleichen mit einer kleinen Wanddicke, beispielsweise mit einer Wanddicke von ca. 30 mm, wie man es z.B. bei Steinzeugrohren antrifft, ist dann keine Halterung des Installationseinsatzes mit dem Anlageelement gemäß vorstehender Beschreibung möglich.

Das Festlegemittel in Form eines Ringes ist auf der Außenoberfläche des Hauptrohres, um die Queröffnung zu positionieren und die Fixierelemente sind am Festlegemittel festzulegen. Hierzu können beispielsweise Haken am Festlegemittel vorgesehen sein, die mit entsprechenden Durchbrüchen am Fixierelement zusammenwirken, wozu die Durchbrüche am Fixierelement in die Haken am Festlegemittel einzuhängen sind.

Bevorzugt sind am Fixierelement in verschiedenen Abständen Durchbrüche angeordnet, sodass für entsprechend unterschiedliche Rohrwanddicken am Hauptrohr dann geeignete Durchbrüche genutzt werden können. Den Durchbrüchen können zu diesem Zweck auch Markierungen oder Informationen zugeordnet sein, um so schnell zu erfassen, welcher Durchbruch bei welcher Wanddicke des Hauptrohres zu nutzen ist.

Auf diese Weise wird der Installationseinsatz in einen fixierten Zustand versetzt.

In diesem fixierten Zustand ist der Installationseinsatz derart in der Queröffnung des Hauptrohres installiert, dass die Krempe an der Innenoberfläche des Hauptrohres oder an der Innenoberfläche des Inliners im Hauptrohr fest anliegt und die äußere Anlagefläche des Installationseinsatzes an der Bohrlochoberfläche der Queröffnung anliegt und diese über wenigstens ein Dichtelement zusätzlich abdichtet.

Bei Hauptrohren mit einer Wanddicke zwischen ca. 30 mm und ca. 60 mm kann das installierende Personal je nach realer Wanddicke auswählen, welche der vorstehend geschilderten Techniken zur Installation anzuwenden ist.

Der Anschlussstutzen ist dann in den Installationseinsatz einzudrücken, in dem zuerst das zylinderförmigen Mittelteil so in die Öffnung des Installationseinsatzes einen geschoben lässt, bis der Steg des Anschlussstutzens auf dem freien, oberen Ende des Anschlussstutzens anliegt. Dabei müssen die am Installationseinsatz angeordneten Haltevorrichtungen mit dem Steg des Installationseinsatzes in Wirkverbindung gebracht werden. In dieser Position steht das obere, freie Ende des Installationseinsatzes mit dem wenigstens einen Steg des Anschlussstutzens in Wirkverbindung.

Durch diese Technik ist sichergestellt, dass eine sehr hohe Zuverlässigkeit hinsichtlich der Dichtheit des Anschlusssystems durch ein sicheres und dichtes Anliegen der Krempe des Installationseinsatzes an der Innenoberfläche des Inliners vorliegt.

Wenn dies geschehen ist, ist der ordnungsgemäße Sitz des Anschlusssystems erreicht, das Festlegemittel in Form des Ringes kann am Anschlusssystem verbleiben, kann aber alternativ auch abgenommen und für die nächste Installation genutzt werden.

Der Installationseinsatz, der Anschlussstutzen und das Festlegemittel der vorliegenden Erfindung können in einem Polymerformgebungsprozess, wie einem Spritzgussprozess oder einem Rotationsgießprozess oder einem Rotationssinterprozess oder einem Pressprozess oder einem Tiefziehprozess oder einem Extrusionsblasprozess oder einem additiven Fertigungsprozess, wie einem 3D-Druckprozess, oder einer Kombination der vorstehend aufgeführten Prozesse hergestellt sein. Die vorstehend genannten Prozesse sind geeignet, die vorstehend Genannten gemäß vorliegender Erfindung in großer Stückzahl reproduzierbar, maßhaltig und kostengünstig herzustellen.

Hierdurch werden Installationseinsätze, Anschlussstutzen und Festlegemittel bereitgestellt, die äußerst widerstandsfähig und fest sind, und die Ansprüche der Kunden bzw. die Vorgaben der einschlägigen Spezifikationen für ihre Anwendung erfüllen.

Es kann sich im Rahmen der vorliegenden Erfindung weiterhin als sehr praktikabel ergeben, wenn vorgesehen ist, dass der Installationseinsatz und / oder der Anschlussstutzen und / oder das Festlegemittel in einem additiven Fertigungsprozess, wie einem 3D-Druckprozess hergestellt ist. Ein solcher Prozess ist geeignet, einen Installationseinsatz und / oder einen Anschlussstutzen und / oder ein Festlegemittel gemäß vorliegender Erfindung in großer Stückzahl reproduzierbar, maßhaltig und kostengünstig herzustellen. So kann insbesondere vorgesehen sein, dass der Installationseinsatz und / oder der Anschlussstutzen und / oder das Festlegemittel ganz oder teilweise unter Verwendung eines generativen Fertigungsverfahrens, beispielsweise durch ein 3-D-Druckverfahren, hergestellt ist. Hierzu kann mit Vorteil ein datenverarbeitungs-maschinenlesbares dreidimensionales Modell für die Herstellung genutzt werden.

Die Erfindung umfasst auch ein Verfahren zur Erzeugung eines datenverarbeitungsmaschinenlesbaren dreidimensionalen Modells zur Verwendung in einem Herstellungsverfahren für einen Installationseinsatz und / oder einen Anschlussstutzen und / oder ein Festlegemittel. Hierbei umfasst das Verfahren insbesondere auch die Eingabe von Daten, die einen Installationseinsatz und / oder einen Anschlussstutzen und / oder ein Festlegemittel darstellen, in eine Datenverarbeitungsmaschine und die Nutzung der Daten, um einen Installationseinsatz und / oder einen Anschlussstutzen und / oder ein Festlegemittel als dreidimensionales Modell darzustellen, wobei das dreidimensionale Modell geeignet ist zur Nutzung bei der Herstellung eines Installationseinsatzes und / oder eines Anschlussstutzens und / oder eines Festlegemittels. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf einen Installationseinsatz und / oder einen Anschlussstutzen und / oder ein Festlegemittel abgegeben wird und die reflektierte Energie empfangen wird, und wobei ein virtuelles dreidimensionales Modell eines Installationseinsatzes und / oder eines Anschlussstutzens und / oder eines Festlegemittels unter Verwendung einer computer- unterstützten Design-Software erzeugt wird. Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungs-verfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen. Anwendung findet die Erfindung überall dort, wo aus Rohren bzw. Rohrformteilen, Schächten und weiteren Bauelementen Rohrsysteme gebaut werden, bei denen ein Rohr an ein Hauptrohr bzw. einen Schacht anzuschließen ist.

Es ergeben sich so Anwendungen der vorliegenden Erfindung insbesondere im Bereich der drucklosen Leitungen zur Aufnahme, Leitung und Speicherung von Fluiden. Dies betrifft in erster Linie Systeme für die Abwasser- und solche für die Regenwasserbewirtschaftung. Aber auch in anderen Bereichen, wie beispielsweise der Schwimmbadtechnik, der Landwirtschaft, dem Industrieanlagenbau und weiteren Anwendungsfeldern kann die Erfindung vorteilhaft genutzt werden.

Bei der vorliegenden Erfindung wird davon ausgegangen, dass Rohre bzw. Rohrformteile und die zu verbindenden Bauelemente im Bereich der herzustellenden fluiddichten Verbindung einen Abschnitt mit kreisförmigem Querschnitt aufweisen. Wesentliche Teile der Figurenbeschreibung beziehen sich darauf.

Die Erfindung umfasst selbstverständlich auch Abschnitte mit Querschnitten bei Rohren bzw. Rohrformteilen und zu verbindenden Bauelementen, die von der Kreisform abweichen, also beispielsweise elliptisch, eiförmig, eckig, abgerundet eckig oder Mischformen der vorstehend Genannten darstellen.

Der Vorteil der vorliegenden Erfindung besteht insbesondere auch darin, dass durch die vorstehend geschilderten konstruktiven Maßnahmen eine Abdichtung gegen die Durchbruchlaibung des Durchbruchs, hier als Bohrlochoberfläche bezeichnet, erfolgt, so dass ein Anschlusssystem vorliegt, das gegenüber solchen des Standes der Technik verbessert ist. Immer wenn vorstehend von Hauptrohren die Rede war, kann stets ein Hauptrohr durch einen Schacht ersetzt werden, ohne die vorliegende Erfindung zu verlassen.

Es versteht sich für den Fachmann, dass die vorliegende Erfindung auch bei Rohren und dergleichen anwendbar ist, die nicht mittels eines Inliners saniert sind.

Auch in diesen Fällen ergeben sich Vorteil im Hinblick auf eine verbesserte Dichtheit des Anschlusssystems zum Rohr oder dergleichen.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Figuren dargestellt und wird in der nachfolgenden Beschreibung näher erläutert.

Hierzu zeigen:
- Fig. 1: eine schematische, seitlich geschnittene Ansicht des Installationseinsatzes, der in einer Queröffnung eines Hauptrohres positioniert ist;
- Fig. 2: eine schematische Draufsicht auf den Installationseinsatz;
- Fig. 3: eine schematische, seitliche geschnittene Ansicht des Anschlusssystems.

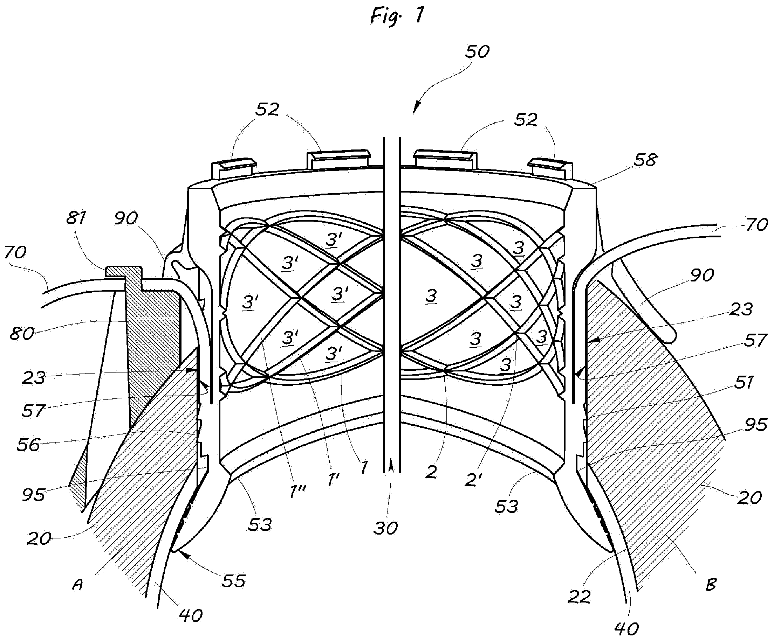

In der **Fig. 1** ist eine schematische, seitliche geschnittene Ansicht des Installationseinsatzes 50, der in einer Queröffnung 30 eines Hauptrohres 20 positioniert ist, gezeigt.

Im Detail ist hier die Ausbildung und Anordnung des Installationseinsatzes 50 bei dem erfindungsgemäßen Anschlusssystem 100 dargestellt.

Der Installationseinsatz 50 umfasst einen aufgeweiteten Endabschnitt, von dem eine abknickende Krempe 55 entspringt.

Der Installationseinsatz 50 weist eine äußere Anlagefläche 57 auf, mit der er im Verbindungszustand die Bohrlochoberfläche 23 kontaktiert.

Durch das Vorsehen von Dichtungsmitteln und / oder Rippen, kombiniert mit einer bestimmten Materialauswahl, die weich oder elastisch ausbildbar ist, wird die Dichtheit zwischen der äußeren Anlagefläche 57 des Installationseinsatzes 50 und der Bohrlochoberfläche 23 des Hauptrohres 20 hergestellt.

Der Installationseinsatz 50 ist hohlstopfenförmig und zumindest teilweise weich ausgebildet, seine Außenseite ist an die Queröffnung 30 angepasst.

Der Installationseinsatz 50 weist wenigstens zwei, von seiner Innenseite 53 wegragende, etwa bogenförmig verlaufende, Dichtungsvorrichtungen 1,1',1" auf.

Die Dichtungsvorrichtungen 1,1',1" kreuzen sich an der Innenseite 53 des Installations-einsatzes 50 an wenigstens zwei Positionen 2,2'.

Die sich kreuzenden Dichtungsvorrichtungen 1,1',1" begrenzen und/oder umschließen dabei wenigstens eine Dichtfläche 3. Die Dichtfläche 3 kann dabei etwa wabenförmig, rautenförmig, labyrinthförmig, mäanderförmig, prismatisch, oval, rund und dergleichen ausgebildet sein.

In diesem Ausführungsbeispiel weist der Installationseinsatz 50 drei, von seiner Innenseite 53 wegragende, etwa sinusförmig verlaufende, Dichtungsvorrichtungen 1,1', 1' auf.

Die Dichtungsvorrichtungen 1,1',1" kreuzen sich an der Innenseite 53 des Installations-einsatzes des 50 in diesem Ausführungsbeispiel etwa an achtundvierzig Positionen 2, 2'. Die sich kreuzenden Dichtungsvorrichtungen 1,1',1" umschließen dabei in diesem Ausführungsbeispiel etwa vierzig Dichtflächen 3,3'. Die Dichtfläche 3,3' ist in diesem Ausführungsbeispiel etwa rautenförmig ausgebildet.

Die Dichtungsvorrichtungen 1,1',1" ragen etwa 0,5 bis 10 mm, bevorzugt 1 bis 7 mm, besonders bevorzugt 1 bis 5 mm von der Innenseite 53 des Installationseinsatzes 50 weg. In diesem Ausführungsbeispiel ragen die Dichtungsvorrichtungen1,1',1" etwa 2 mm von der Innenseite 53 des Installationseinsatzes 50 weg.

Der Installationseinsatz 50 des Anschlusssystems 100 ist so ausgebildet, dass die sich kreuzenden Dichtungsvorrichtungen 1,1',1" im Querschnitt etwa rund, oval, prismatisch, insbesondere dreieckförmig ausgebildet sind. In diesem Ausführungsbeispiel sind die sich kreuzenden Dichtungsvorrichtungen 1,1',1" im Querschnitt etwa dreieckförmig ausgebildet.

Das Anschlusssystem 100 ist weiter so ausgebildet, dass an der Außenseite 51 des Installationseinsatzes 50 wenigstens ein Dichtelement 56 angeordnet ist.

Das Dichtelement 56 dichtet vorteilhafterweise auch gegen die Bohrlochoberfläche 23 ab.

Weiter ist das Anschlusssystem 100 so ausgebildet, dass zwischen der Krempe 55 und dem wenigstens einem Dichtelement 56 wenigstens ein Hohlraum angeordnet ist.

Das Anschlusssystem ist weiter so ausgebildet, dass zwischen der Krempe 55 und dem wenigstens einem Dichtelement 56 wenigstens eine Quelldichtung 95 angeordnet ist. Weiterhin ist das Anschlusssystem 100 so ausgebildet, dass zwischen der Krempe 55 und dem wenigstens einem Dichtelement 56 in wenigstens einem Hohlraum wenigstens eine Quelldichtung 95 angeordnet ist. Die Quelldichtung 95 ist eine zusätzliche, ergänzende Abdichtung gegen ev. Unebenheiten an den Schnittkanten des Inliners 40.

Der Installationseinsatz 50 des Anschlusssystems 100 weist an seinem freien, oberen Ende 58 wenigstens zwei, zum Innenraum 53 ragende, Haltevorrichtungen 52 auf. In diesem Ausführungsbeispiel weist der Installationseinsatz 50 des Anschlusssystems 100 acht zum Innenraum 53 ragende, Haltevorrichtungen 52 auf. Die Haltevorrichtungen 52 sind dabei äquidistant zueinander, gegenüberliegend angeordnet. Es liegt jedoch auch im Rahmen der Erfindung, dass die Haltevorrichtungen 52 des Installationseinsatz des 50 unregelmäßig am freien, oberen Ende 58 angeordnet sind.

Am Endabschnitt 58 des Installationseinsatzes 50, der dem aufgeweiteten Endabschnitt gegenüberliegt, ist wenigstens ein Anlageelement 90 ausgebildet. Das Anlageelement 90 steht vom Endabschnitt 58 des Installationseinsatzes 50 nach außen weg und ist in Richtung des aufgeweiteten Endabschnitts gekrümmt.

Bei Hauptrohren 20, die einen geringen Durchmesser und eine geringe Rohrwanddicke aufweisen, kommt es dazu, dass die Bohrlochoberfläche 23 vergleichsweise klein ist.

Dies ist in der Fig. 1 auf der linken Seite im Bereich A gezeigt, das Hauptrohr 20 ist hier z.B. ein Steinzeugrohr mit einer Wanddicke von ca. 30 mm .

An der Krempe 55 gegenüberliegend ist an der Anlagefläche 57 des Installationseinsatzes 50 wenigstens ein Fixierelement 70 angeordnet. Das Fixierelement 70 ist einstückig in dieser Ausführungsform des Installationseinsatzes 50 mit diesem ausgebildet.

Das Fixierelement 70 ist durch die Queröffnung 30 des Hauptrohres 20 nach außen geführt und erstreckt sich ein Stück weit über dessen Außenoberfläche 21.

Das Fixierelement 70 ist an einem Festlegemittel 80, an dem ein Haken 81 ausgebildet ist, festgelegt. Hierzu ist am Fixierelement 70 mindestens ein Durchbruch 71 vorgesehen, der mit dem Haken 81 des Festlegemittels 80 zusammenwirkt.

Durch das Zusammenwirken von Fixierelement 70 und Festlegemittel 80 ist der Installationseinsatz 50 in einem fixierten Zustand in der Queröffnung 30 des Hauptrohres 20 positioniert und dichtet mit der Krempe 55 zur Innenoberfläche des Inliners 40 im Hauptrohr 20 ab.

Bei Hauptrohren 20, die einen großen Durchmesser und eine große Rohrwanddicke aufweisen, kommt es dazu, dass die Bohrlochoberfläche 23 vergleichsweise groß ist.

Dies ist in der Fig. 1 auf der rechten Seite im Bereich B gezeigt, das Hauptrohr 20 ist hier z.B. ein Beton- oder Stahlbetonrohr mit einer Wanddicke von ca. 60 mm.

In diesem fixierten Zustand ist der Installationseinsatz 50 derart in der Queröffnung 30 des Hauptrohres 20 installiert, dass die Krempe 55 (als Übergangsteil zwischen einem Rohr und seinem Abschluss) an der Innenoberfläche des Inliners 40 oder an der Innenoberfläche 22 des Hauptrohres 20 im Hauptrohr 20 fest anliegt und die äußere Anlagefläche 57 des Installationseinsatzes 50 an der Bohrlochoberfläche 23 der Queröffnung 30 anliegt.

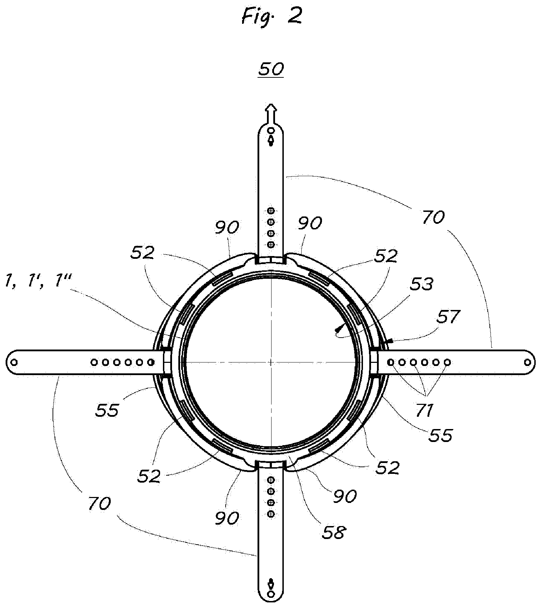

In der **Fig. 2** ist eine schematische Draufsicht auf den Installationseinsatz 50 dargestellt. Die Blickrichtung ist dabei so gewählt, dass das obere, freie Ende 58 zu sehen ist.

Die Bezugszeichen in Fig. 2 entsprechen denen aus der vorherigen Figur.

Der Installationseinsatz 50 ist diesem Ausführungsbeispiel symmetrisch ausgebildet. Weiterhin weist der Installationseinsatz 50 wenigstens zwei, von seiner Innenseite 53 wegragende, etwa bogenförmig verlaufende, Dichtungsvorrichtungen 1,1',1" auf.

Der Installationseinsatz 50 des Anschlusssystems 100 weist an seinem freien, oberen Ende 58 wenigstens zwei, zum Innenraum 53 ragende, Haltevorrichtungen 52 auf.

In diesem Ausführungsbeispiel weist der Installationseinsatz 50 des Anschlusssystems 100, acht zum Innenraum 53 ragende, Haltevorrichtungen 52 auf. Die Haltevorrichtungen 52 sind dabei äquidistant zueinander gegenüberliegend angeordnet.

Am Ende der hier nicht sichtbaren Anlagefläche 57 des Installationseinsatzes 50 sind Fixierelemente 70 in Form von Bändern mit einem Winkelabstand zum jeweiligen Nachbarn von etwa 90° ausgebildet. Auf diese Weise sind vier Fixierelemente 70 in Form von Bändern am Endabschnitt 58 angeordnet.

Jedes Fixierelement 70 weist Durchbrüche 71 auf, die mit bestimmten Abständen zueinander ausgebildet sind. Das freie Ende des Fixiermittels 70 erleichtert die Installation des Fixiermittels 70 bei der Herstellung des Anschlusssystems 100.

Zwischen jeweils zwei Fixierelementen 70 ist jeweils ein Anlageelement 90 in Form einer von dem Endabschnitt 58 des Installationseinsatzes 50 nach außen weg stehenden Lippe, die in Richtung des aufgeweiteten Endabschnitts, gekrümmt ist.

Ein solcher Installationseinsatz 50 mit Fixierelementen 70 und Anlageelementen 90 kann einstückig geformt sein und so in einfacher Weise beispielsweise in einem Spritzgussvorgang aus einem Polymermaterial und / oder einem Elastomermaterial, wie beispielsweise Kautschuk, hergestellt sein.

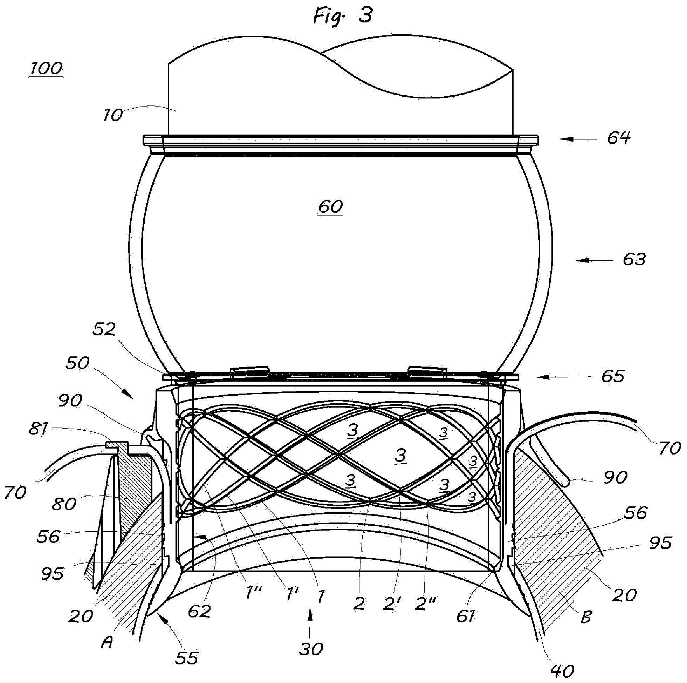

In der **Fig. 3** ist in einer schematischen seitlichen, teilweise geschnittenen Ansicht das Anschlusssystem 100 gezeigt.

Die Bezugszeichen in Fig. 3 entsprechen denen aus den vorherigen Figuren.

Das Anschlusssystem 100 ist hierbei in einem Verbindungszustand gezeigt, bei dem ein Rohr 10 mithilfe des Anschlusssystems 100 mit einem Hauptrohr 20 verbunden ist, sodass das Rohr 10 etwa senkrecht in das Hauptrohr 20 einmündet.

Das Hauptrohr 20, das beispielsweise aus Beton oder Steinzeug oder Stahlbeton hergestellt ist, weist eine Außenoberfläche 21 und eine Innenoberfläche 22 auf.

Die Innenoberfläche 22 begrenzt das Lumen des Hauptrohres 20.

Im Hauptrohr 20 ist eine Queröffnung 30 eingebracht, die von einer Bohrlochoberfläche 23 begrenzt wird. Die Queröffnung 30 ist beispielsweise durch ein Bohrverfahren oder ein Fräsverfahren hergestellt. Die Queröffnung 30 weist bevorzugt einen kreisrunden Querschnitt auf, kann aber auch anders gestaltet sein.

Das Hauptrohr 20 ist beispielsweise mit einem Inliner 40 saniert. Dazu ist der Inliner 40, der als eine dünne Schicht ausgebildet ist, die ein Polymermaterial enthält oder aus einem Polymermaterial besteht, an der Innenoberfläche 22 des Hauptrohres 20 zumindest teilweise anliegend angeordnet.

Im Verbindungszustand weist das Anschlusssystem 100 einen Installationseinsatz 50 auf, der mit seiner äußeren Anlagefläche 57 mit der Bohrlochoberfläche 23 in Kontakt steht. Das Anschlusssystem 100 zum Anschließen eines Rohres 10 an ein Hauptrohr 20, einen Schacht, oder dergleichen, an einer Queröffnung 30, wobei das Anschlusssystem 100 zu diesem Zweck mit dem Hauptrohr 20 oder dem Schacht verbindbar ist, mit einem hohlstopfenförmigen, zumindest teilweise weichen Installationseinsatz 50, dessen Außenseite 51 an die Queröffnung 30 angepasst ist, wobei der Installationseinsatz 50 einen aufgeweiteten Endabschnitt mit wenigstens einer Krempe 55 (als Übergangsteil zwischen einem Rohr und seinem Abschluss) aufweist, der durch Einbringen der Krempe 55 voran durch die Queröffnung 30 des Hauptrohres 20 oder Schachts in dieses / diesen teilweise einschiebbar ist, und wobei eine äußere Anlagefläche 57 des Installationseinsatzes 50 in einem Verbindungszustand, in dem das Anschlusssystem 100 mit dem Hauptrohr 20 oder Schacht verbunden ist, wenigstens teilweise eine Bohrlochoberfläche 23, die an die Queröffnung 30 angrenzt und diese umgibt, kontaktiert, wobei an dem, dem aufgeweiteten Endabschnitt gegenüberliegenden, Endabschnitt 58 des Installationseinsatzes 50 wenigstens ein Anlageelement 90 und der Krempe 55 gegenüberliegend an der Anlagefläche 57 des Installationseinsatzes 50 wenigstens ein Fixierelement 70 angeordnet ist, und einem relativ härteren Anschlussstutzen 60, der ein Eingriffsende 61, einen zylinderförmigen Mittelteil 62 und ein Verbindungsende 64 aufweist, dass der Anschlussstutzen 60 an seinem zylinderförmigen Mittelteil 62 und/oder seinem Verbindungsende 64 wenigstens einen Steg 65 aufweist, zeichnet sich dadurch aus, dass der Installationseinsatz 50 wenigstens zwei, von seiner Innenseite 53 wegragende, etwa bogenförmig verlaufende, Dichtungsvorrichtungen 1,1',1" aufweist, dass die Dichtungsvorrichtungen 1,1',1" sich an der Innenseite 53 des Installationseinsatzes 50 an wenigstens zwei Positionen 2,2' kreuzen. In diesem Ausführungsbeispiel weist der Installationseinsatz 50 drei, etwa parallel zueinander angeordnete, sinusförmig verlaufende Dichtungsvorrichtungen 1,1',1" auf. Die Dichtungsvorrichtungen 1,1',1" kreuzen sich in diesem Ausführungsbeispiel an der Innenseite 53 des Installations-einsatzes 50 an etwa sechsundfünfzig Positionen 2,2'. Die sich kreuzenden Dichtungsvorrichtungen 1,1',1" des Installationseinsatzes 50 begrenzen und/oder umschließen dabei in diesem Ausführungsbeispiel etwa fünfzig Dichtflächen 3.

Die Dichtflächen 3 sind dabei etwa wabenförmig, rautenförmig, labyrinthförmig, mäanderförmig, prismatisch, oval, rund dergleichen ausgebildet. In diesem Ausführungsbeispiel sind die Dichtflächen 3 prismatisch, d. h. mehreckig insbesondere viereckig bzw. dreieckig ausgebildet.

Die Dichtungsvorrichtungen1,1',1" des Installationseinsatz des 50 stehen mit dem wenigstens einen zylinderförmigen Mittelteil 53 des Anschlussstutzens 60 abdichtend in Wirkverbindung.

Weiterhin ist das Anschlusssystem 100 so ausgebildet, dass das obere freie Ende 58 des Installationseinsatz des 50 mit dem wenigstens einen Steg 65 des Anschlussstutzens 60 abdichten den Wirkverbindung steht.

Der Installationseinsatz 50 weist an seinem freien, oberen Ende 58 wenigstens zwei, zum Innenraum 53 ragende, Haltevorrichtungen 52 auf.

Die Haltevorrichtungen 52 des Installationseinsatz des 50 stehen dabei mit wenigstens einem Steg 65 des Anschlussstutzens 60 in Wirkverbindung.

Das Anschlusssystem 100 ist dabei so ausgebildet, dass der Anschlussstutzen 60 und / oder der Installationseinsatz 50 und / oder das Fixierelement 70 und / oder das Festlegemittel 80 ein Polymermaterial enthält oder aus einem Polymermaterial besteht, wobei das Polymermaterial bevorzugt ein Thermoplast, besonders bevorzugt ein Polyolefin, wie beispielsweise ein Polypropylen oder ein Polyethylen oder ein Polybutylen oder ein Copolymeres der Vorgenannten, oder ein Polyvinylchlorid ist, und / oder dass der Installationseinsatz 50 ein elastomeres Polymermaterial enthält oder aus einem solchen besteht.

Bei einem Hauptrohr 20 z.B. aus Steinzeug mit einer Wanddicke von ca. 30 mm - wie es in der Fig. 3 im Bereich A auf der linken Seite des Anschlusssystems 100 gezeigt ist - ist zur Fixierung des Anschlusssystems 100 das Fixierelement 70 mit einem Festlegemittel 80, das einen Haken 81 aufweist, derart in Wirkverbindung gebracht, dass der Installationseinsatz 50 in der Queröffnung 30 des Hauptrohres 20 in einem fixierten Zustand gehalten wird. Eine Krempe 55 an einem weiteren Endabschnitt des Installationseinsatzes 50 liegt dabei an der Innenoberfläche des Inliners 40 an.

Das Fixierelement 70 in Form eines Bandes ist derartig gebildet, dass es leicht biegbar bzw. abbiegbar oder abwinkelbar ist.

Durch die besondere Ausbildung von Festlegemittel 80 und Fixierelementen 70 zentriert sich das Festlegemittel 80 in Bezug auf die Queröffnung 30 im Hauptrohr 20, wenn der fixierte Zustand des Installationseinsatzes 50 hergestellt wird.

Bei der Installation des Anschlusssystems 100 in der Queröffnung 30 des Hauptrohres 20 kann dann eine Verpressung des für die hohe Zuverlässigkeit hinsichtlich der Dichtheit vorgesehenen Installationseinsatzes 50 nicht nur zur Bohrlochoberfläche 23 hin erfolgen, sondern auch zur Innenoberfläche im entsprechenden Durchbruch des als Kreisring ausgebildeten Festlegemittels 80. Damit wird eine verbesserte Stabilität des Anschlusssystems 100 bei Hauptrohren 20 mit geringem Durchmesser und geringer Rohrwanddicke erreicht.

Bei einem Hauptrohr 20 z.B. aus Beton- oder Stahlbeton mit einer Wanddicke von ca. 60 mm - wie es in der Fig. 3 im Bereich B auf der rechten Seite des Anschlusssystems 100 gezeigt ist - liegt zur Fixierung des Anschlusssystems 100 das Anlageelement 90 an der Außenoberfläche 21 des Hauptrohres 20 an.

In diesem fixierten Zustand ist der Installationseinsatz 50 derart in der Queröffnung 30 des Hauptrohres 20 installiert, dass die Krempe 55 (als Übergangsteil zwischen einem Rohr und seinem Abschluss) an der Innenoberfläche des Inliners 40 oder an der Innenoberfläche 22 des Hauptrohres 20 im Hauptrohr 20 fest anliegt und die äußere Anlagefläche 57 des Installationseinsatzes 50 an der Bohrlochoberfläche 23 der Queröffnung 30 anliegt.

Zum Einbringen des Anschlussstutzens 60 in den Installationseinsatz 50 ist ein Eingriffsende 61 des Anschlussstutzens 60 nutzbar.

Der Anschlussstutzen 60 weist einen zylindrischen Mittelteil 62 auf, der beim Eindrücken des Anschlussstutzens 60 in den Installationseinsatz 50 für die Herstellung der notwendigen Dichtheit zwischen der Krempe 55 und der inneren Oberfläche des Inliners 40 bzw. der Innenoberfläche 22 des Hauptrohres 20 sorgt.

Der härtere Anschlussstutzen 60 ist dabei so weit in den Installationseinsatz 50 eingebracht, dass der Installationseinsatz 50 ordnungsgemäß verpresst ist, um eine möglichst hohe Zuverlässigkeit hinsichtlich der Dichtheit des Anschlusssystems 100 herzustellen.

Durch das Vorsehen eines zylinderförmigen Mittelteils 62 ist eine besonders starke Anlage und damit sowohl eine in hohem Maße fluiddichte wie auch feste und dauerhafte Verbindung des Anschlusssystems 100 zum Hauptrohr 20 herstellbar.

Wenn die Montage des Anschlusssystems 100 richtig erfolgt ist, ist eine möglichst hohe Dichtheit hergestellt, sodass das Fluid beispielsweise von dem Rohr 10 in das Hauptrohr 20 einströmen kann, ohne dass Fluid an unerwünschte Stellen oder eventuell sogar nach außen in die Umwelt gelangt. Ebenso wenig kann in unerwünschter Weise Fluid von außen in das Hauptrohr 20 bzw. das Anschlusssystem 100 gelangen.

## Patentansprüche

1. Anschlusssystem (100) zum Anschließen eines Rohres (10) an ein Hauptrohr (20), einen Schacht, oder dergleichen, an einer Queröffnung (30), wobei das Anschlusssystem (100) zu diesem Zweck mit dem Hauptrohr (20) oder dem Schacht verbindbar ist, mit einem hohlstopfenförmigen, zumindest teilweise weichen Installationseinsatz (50), dessen Außenseite (51) an die Queröffnung (30) anpassbar ist, wobei der Installationseinsatz (50) einen aufgeweiteten Endabschnitt mit wenigstens einer Krempe (55) aufweist, der durch Zusammendrücken mit der Krempe (55) voran durch die Queröffnung (30) des Hauptrohres (20) oder Schachts in dieses / diesen teilweise einschiebbar ist, und wobei eine äußere Anlagefläche (57) des Installationseinsatzes (50) derart ausgestaltet ist, dass in einem Verbindungszustand, in dem das Anschlusssystem (100) mit dem Hauptrohr (20) oder Schacht verbunden ist, wenigstens teilweise eine Bohrlochoberfläche (23), die an die Queröffnung (30) angrenzt und diese umgibt, kontaktiert, wobei an dem der Krempe (55) gegenüberliegenden Endabschnitt (58) des Installationseinsatzes (50) wenigstens ein Anlageelement (90) und der Krempe (55) gegenüberliegend an der Anlagefläche (57) des Installationseinsatzes (50) wenigstens ein Fixierelement (70) angeordnet ist, und einem relativ härteren Anschlussstutzen (60), der ein Eingriffsende (61), einen zylinderförmigen Mittelteil (62) und ein Verbindungsende (64) aufweist, wobei der Anschlussstutzen (60) an seinem zylinderförmigen Mittelteil (62) und/oder seinem Verbindungsende (64) wenigstens einen Steg (65) aufweist, wobei der Installationseinsatz (50) wenigstens zwei, von seiner Innenseite (53) wegragende, etwa bogenförmig verlaufende, Dichtungsvorrichtungen (1,1',1") aufweist, **dadurch gekennzeichnet, dass** die Dichtungsvorrichtungen (1,1',1") sich an der Innenseite (53) des Installations-einsatzes (50) an wenigstens zwei Positionen (2,2') kreuzen, wobei der Installationseinsatz (50) an seinem freien, oberen Ende (58) wenigstens zwei, zum Innenraum (53) ragende, Haltevorrichtungen (52) aufweist.

2. Anschlusssystem (100) nach Anspruch 1, **dadurch gekennzeichnet, dass** die sich kreuzenden Dichtungsvorrichtungen (1,1',1") wenigstens eine Dichtfläche (3,3') begrenzen und/oder umschließen.

3. Anschlusssystem (100) nach einem der vorangehenden Ansprüche, **dadurch gekennzeichnet, dass** die Dichtfläche (3,3') wabenförmig, rautenförmig, labyrinthförmig, mäanderförmig, prismatisch, oval oder rund ausgebildet ist.

4. Anschlusssystem (100) nach einem der vorangehenden Ansprüche, **dadurch gekennzeichnet, dass** die Dichtungsvorrichtungen (1,1',1" ) etwa 0,5 bis 10 mm, bevorzugt 1 bis 7 mm, besonders bevorzugt 1 bis 5 mm von der Innenseite (53) des Installationseinsatzes (50) wegragen.

5. Anschlusssystem (100) nach einem der vorangehenden Ansprüche, **dadurch gekennzeichnet, dass** die zwei sich kreuzenden Dichtungsvorrichtungen (1,1',1") des Installationseinsatzes (50) mit dem wenigstens einem zylinderförmigen Mittelteil (62) des Anschlussstutzens (60) abdichtend in Wirkverbindung stehen.

6. Anschlusssystem (100) nach einem der vorangehenden Ansprüche, **dadurch gekennzeichnet, dass** das obere freie Ende (58) des Installationseinsatzes (50) mit dem wenigstens einen Steg (65) des Anschlussstutzens (60) abdichtend in Wirkverbindung steht.

7. Anschlusssystem (100) nach einem der vorangehenden Ansprüche, **dadurch gekennzeichnet, dass** zwischen der Krempe (55) und dem wenigstens einem Dichtelement (56) wenigstens eine Quelldichtung (95) angeordnet ist.

8. Anschlusssystem (100) nach einem der vorangehenden Ansprüche, **dadurch gekennzeichnet, dass** die wenigstens zwei Haltevorrichtungen (52) des Installationseinsatzes (50) mit wenigstens einem Steg (65) des Anschlussstutzens (60) in Wirkverbindung stehen.

9. Anschlusssystem (100) nach einem der vorangehenden Ansprüche, **dadurch gekennzeichnet, dass** der Anschlussstutzen (60) und / oder der Installationseinsatz (50) und / oder das Fixierelement (70) ein Polymermaterial enthält oder aus einem Polymermaterial besteht, wobei das Polymermaterial bevorzugt ein Thermoplast, besonders bevorzugt ein Polyolefin, wie beispielsweise ein Polypropylen oder ein Polyethylen oder eine Polybutylen oder ein Copolymeres der Vorgenannten, oder ein Polyvinylchlorid ist, und / oder dass der Installationseinsatz (50) ein elastomeres Polymermaterial enthält oder aus einem solchen besteht.

10. Rohrsystem mit wenigstens einem Anschlusssystem (100) nach einem der Ansprüche 1 bis 9.

## Claims

1. Connection system (100) for connecting a pipe (10) to a main pipe (20), a manhole, or the like, at a lateral opening (30), wherein the connection system (100) is connectable for this purpose to the main pipe (20) or to the manhole, comprising a hollow-plug-shaped, at least partially soft installation insert (50), the outer side (51) of which is adaptable to the lateral opening (30), wherein the installation insert (50) has a flared end section with at least one flange (55), which is partially insertable into the main pipe (20) or manhole by compressing it with the flange (55) leading through the lateral opening (30) of the main pipe (20) or manhole, and wherein an outer contact surface (57) of the installation insert (50) is designed such that, in a connected state in which the connection system (100) is connected to the main pipe (20) or manhole, it contacts at least in part a borehole surface (23) that adjoins and surrounds the lateral opening (30), wherein at the end section (58) of the installation insert (50) opposite the flange (55) at least one contact element (90) is arranged and, opposite the flange (55), at the contact surface (57) of the installation insert (50) at least one fixing element (70) is arranged, and comprising a relatively harder connection spigot (60) which has an engagement end (61), a cylindrical middle part (62) and a connection end (64), wherein the connection spigot (60) has at least one rib (65) on its cylindrical middle part (62) and/or its connection end (64), wherein the installation insert (50) has at least two approximately arcuate sealing devices (1,1',1") projecting away from its inner side (53), **characterized in that** the sealing devices (1,1',1") cross at least at two positions (2,2') on the inner side (53) of the installation insert (50), wherein the installation insert (50) has, at its free upper end (58), at least two retaining devices (52) projecting into the interior (53).

2. Connection system (100) according to claim 1, **characterized in that** the crossing sealing devices (1,1',1") delimit and/or enclose at least one sealing surface (3,3').

3. Connection system (100) according to one of the preceding claims, **characterized in that** the sealing surface (3,3') is formed in a honeycomb-shaped, diamond-shaped, labyrinth-shaped, meander-shaped, prismatic, oval or round manner.

4. Connection system (100) according to one of the preceding claims, **characterized in that** the sealing devices (1,1',1") project approximately 0.5 to 10 mm, preferably 1 to 7 mm, particularly preferably 1 to 5 mm away from the inner side (53) of the installation insert (50).

5. Connection system (100) according to one of the preceding claims, **characterized in that** the two crossing sealing devices (1,1',1") of the installation insert (50) are in sealing operative connection with the at least one cylindrical middle part (62) of the connection spigot (60).

6. Connection system (100) according to one of the preceding claims, **characterized in that** the free upper end (58) of the installation insert (50) is in sealing operative connection with the at least one rib (65) of the connection spigot (60).

7. Connection system (100) according to one of the preceding claims, **characterized in that** at least one swell seal (95) is arranged between the flange (55) and the at least one sealing element (56).

8. Connection system (100) according to one of the preceding claims, **characterized in that** the at least two retaining devices (52) of the installation insert (50) are in operative connection with at least one rib (65) of the connection spigot (60).

9. Connection system (100) according to one of the preceding claims, **characterized in that** the connection spigot (60) and/or the installation insert (50) and/or the fixing element (70) contains polymer material or consists of a polymer material, wherein the polymer material is preferably a thermoplastic, particularly preferably a polyolefin, such as for example a polypropylene or a polyethylene or a polybutylene or a copolymer of the aforementioned, or a polyvinyl chloride, and/or **in that** the installation insert (50) contains an elastomeric polymer material or consists of such.

10. Pipe system with at least one connection system (100) according to one of claims 1 to 9.

## Revendications

1. Système de raccordement (100) destiné à raccorder un tuyau (10) à une conduite principale (20), un regard, ou analogue, au niveau d'une ouverture transversale (30), ledit système de raccordement (100) pouvant à cette fin être raccordé à la conduite principale (20) ou au regard, comprenant un insert d'installation (50) en forme de bouchon creux, au moins partiellement souple, dont la face extérieure (51) est adaptable à l'ouverture transversale (30), l'insert d'installation (50) présentant une section d'extrémité évasée avec au moins une collerette (55), laquelle est partiellement introduisible dans celle-ci / celui-ci en comprimant l'insert avec la collerette (55) en avant à travers l'ouverture transversale (30) de la conduite principale (20) ou du regard, et une surface d'appui extérieure (57) de l'insert d'installation (50) étant conçue de telle sorte que, dans un état de raccordement dans lequel le système de raccordement (100) est raccordé à la conduite principale (20) ou au regard, elle entre en contact au moins partiellement avec une surface de forage (23) jouxtant et entourant l'ouverture transversale (30), un élément d'appui (90) étant disposé sur la section d'extrémité (58) de l'insert d'installation (50) opposée à la collerette (55) et, opposé à la collerette (55), au niveau de la surface d'appui (57) de l'insert d'installation (50), au moins un élément de fixation (70) étant disposé, et comprenant un embout de raccordement (60) relativement plus dur, lequel présente une extrémité d'engagement (61), une partie médiane cylindrique (62) et une extrémité de raccordement (64), l'embout de raccordement (60) présentant au niveau de sa partie médiane cylindrique (62) et/ou de son extrémité de raccordement (64) au moins une nervure (65), l'insert d'installation (50) présentant au moins deux dispositifs d'étanchéité (1,1',1") sensiblement en arc, faisant saillie à partir de sa face intérieure (53), **caractérisé en ce que** les dispositifs d'étanchéité (1,1',1") se croisent, sur la face intérieure (53) de l'insert d'installation (50), en au moins deux positions (2,2'), l'insert d'installation (50) présentant, à son extrémité supérieure libre (58), au moins deux dispositifs de retenue (52) faisant saillie vers l'espace intérieur (53).

2. Système de raccordement (100) selon la revendication 1, **caractérisé en ce que** les dispositifs d'étanchéité (1,1',1") se croisant délimitent et/ou entourent au moins une surface d'étanchéité (3,3').

3. Système de raccordement (100) selon l'une quelconque des revendications précédentes, **caractérisé en ce que** la surface d'étanchéité (3,3') est de forme alvéolaire, losangée, labyrinthique, méandriforme, prismatique, ovale ou ronde.

4. Système de raccordement (100) selon l'une quelconque des revendications précédentes, **caractérisé en ce que** les dispositifs d'étanchéité (1,1',1") font saillie d'environ 0,5 à 10 mm, de préférence de 1 à 7 mm, de manière particulièrement préférée de 1 à 5 mm, par rapport à la face intérieure (53) de l'insert d'installation (50).

5. Système de raccordement (100) selon l'une quelconque des revendications précédentes, **caractérisé en ce que** les deux dispositifs d'étanchéité (1,1',1") se croisant de l'insert d'installation (50) sont en liaison fonctionnelle étanche avec la partie médiane cylindrique (62) de l'embout de raccordement (60).

6. Système de raccordement (100) selon l'une quelconque des revendications précédentes, **caractérisé en ce que** l'extrémité supérieure libre (58) de l'insert d'installation (50) est en liaison fonctionnelle étanche avec la ou les nervure(s) (65) de l'embout de raccordement (60).

7. Système de raccordement (100) selon l'une quelconque des revendications précédentes, **caractérisé en ce qu'**au moins un joint gonflant (95) est disposé entre la collerette (55) et le ou les élément(s) d'étanchéité (56).

8. Système de raccordement (100) selon l'une quelconque des revendications précédentes, **caractérisé en ce que** les au moins deux dispositifs de retenue (52) de l'insert d'installation (50) sont en liaison fonctionnelle avec au moins une nervure (65) de l'embout de raccordement (60).

9. Système de raccordement (100) selon l'une quelconque des revendications précédentes, **caractérisé en ce que** l'embout de raccordement (60) et/ou l'insert d'installation (50) et/ou l'élément de fixation (70) contient un matériau polymère ou est constitué d'un matériau polymère, le matériau polymère étant de préférence un thermoplastique, de manière particulièrement préférée une polyoléfine, telle par exemple un polypropylène ou un polyéthylène ou un polybutylène ou un copolymère des précités, ou un polychlorure de vinyle, et/ou **en ce que** l'insert d'installation (50) contient un matériau polymère élastomère ou est constitué d'un tel matériau.

10. Système de tuyauterie comportant au moins un système de raccordement (100) selon l'une quelconque des revendications 1 à 9.
